# EUROPÄISCHE PATENTANMELDUNG

(11) **EP 2 559 467 A1**
(43) Veröffentlichungstag der Anmeldung: **20.02.2013**
(21) Anmeldenummer: 12005896.1
(22) Anmeldetag: 16.08.2012
(51) Int. Cl.: B01D 29/21, B01D 46/24, B01D 46/52

(54) **Filterelement**

(30) Priorität: 16.08.2011 DE 102011110756
(71) Anmelder: Hydac Filtertechnik GmbH, 66280 Sulzbach/Saar (DE)
(72) Erfinder: Lauer, Viktor Josef, 66809 Nalbach (DE); Kleemann, Daniel, 66130 Saarbrücken (DE); Nenno, Alexander, 66538 Neunkirchen (DE); Otto, John, 66129 Saarbrücken (DE)
(74) Vertreter: Bartels & Partner

(57) **Zusammenfassung**

Ein Filterelement mit einem vorzugsweise mehrlagig ausgebildeten Filtermedium (1), das sternartig gefaltet ist und einen Hohlzylinder bildet, an dessen Außenseite und/oder Innenseite ein an den zugewandten Faltenrücken anliegender, fluiddurchlässiger Stützmantel (3; 5) vorgesehen ist, ist dadurch gekennzeichnet, dass Verbindungsmittel (11; 17) vorgesehen sind, die in Zusammenwirkung mit den dem jeweiligen Stützmantel (5; 3) zugewandten Faltenrücken (9) des Filtermediums Verbindungszonen (13) bilden, und dass die Verbindungsmittel (11; 17) derart verteilt angeordnet sind, dass sämtliche umfänglichen, dem Stützmantel (5; 3) zugewandten Faltenrücken (9) innerhalb zumindest einer Verbindungszone (13) gelegen sind.

## Beschreibung

Die Erfindung betrifft ein Filterelement mit einem vorzugsweise mehrlagig ausgebildeten Filtermedium, das sternartig gefaltet ist und einen Hohlzylinder bildet, an dessen Außenseite und/oder Innenseite ein an den zugewandten Faltenrücken anliegender, fluiddurchlässiger Stützmantel vorgesehen ist.

Derartige Filterelemente mit einem gefalteten oder plissierten Filtermedium kommen bei Systemen und Anlagen, in denen Fluide als Betriebsmittel angewandt werden, zum Einsatz, um die einwandfreie Beschaffenheit der betreffenden Fluide sicherzustellen. Bei den in Frage kommenden Fluiden kann es sich beispielsweise um Schmieröle, Kraftstoffe und Hydraulikflüssigkeiten, um Prozesswässer sowie um Luftströme handeln, die mit Verunreinigungen belastet sind, die kolloidale oder als Feststoffpartikel vorliegende Verunreinigungen enthalten. Insbesondere bei höherwertigen Anlagen ist es aus Sicherheitsgründen und auch aus wirtschaftlichen Gründen heraus erforderlich, dass die im Einsatz befindlichen Filterelemente über die vorgesehenen Einsatzzeiten hinaus ihre volle Leistungsfähigkeit erbringen. Fehlfunktionen der Filterelemente würden Betriebsstörungen, bis hin zum Ausfall der Anlagen, verursachen, was zu wirtschaftlichen Schäden führen kann.

Beim Betrieb von Filterelementen mit sterngefalteten Filtermedien ist eine mögliche Ursache einer Fehlfunktion darin zu sehen, dass beim Durchströmen der gefalteten Struktur des Filtermediums dieses lokalen Beanspruchungen ausgesetzt ist, durch die es zu örtlichen Blockbildungen der Falten kommen kann, wodurch vereinzelte Areale der Filterfläche miteinander verblockt werden, so dass an diesen Bereichen kein oder nur ein geringerer Durchfluss mit entsprechend geringer Schmutzaufnahme mehr stattfindet. Ein Lösungsvorschlag zur Behebung dieser Fehlerquelle, der in DE 10 2004 054 245 A1 offenbart ist, sieht bei einem Filterelement der eingangs genannten Gattung Stabilisiermittel in Form von bandförmigen Flächenelementen vor, die als geschlossener Ring um die Außenseite des Filtermediums herumgelegt sind, wobei als Fixiermittel an den Innenseiten der Bänder Verbindungsstellen mit den anliegenden Faltenrücken des Filtermediums gebildet sind. Die Verbindungsstellen sind jeweils durch Schweißstellen ausgebildet, an denen durch thermischen Prozess die Werkstoffe der äußeren Lage des Filtermediums und des anliegenden Bandes miteinander verschmolzen sind.

Abgesehen davon, dass in Anbetracht der großen Anzahl plissierter Falten eine Vielzahl von Schweißvorgängen auszuführen ist, was die Herstellung kompliziert und verteuert, besteht ein weiterer Nachteil der bekannten Lösung darin, dass die Freiheit der Werkstoffwahl insofern eingeschränkt ist, als für die bandförmigen Flächenelemente und die äußere Lage des Filtermediums eine Werkstoffpaarung gewählt werden muss, die für einen daran unmittelbar auszuführenden Schweißvorgang kompatibel ist.

Ausgehend von diesem Stand der Technik stellt sich die Erfindung die Aufgabe, ein Filterelement zur Verfügung zu stellen, das einfach und rationell herstellbar ist, nichts desto weniger jedoch eine einwandfreie Stabilisierung der Faltengeometrie gewährleistet.

Erfindungsgemäß ist diese Aufgabe durch ein Filterelement gelöst, das die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass Verbindungsmittel vorgesehen sind, die in Zusammenwirkung mit den dem jeweiligen Stützmantel zugewandten Faltenrücken des Filtermediums Verbindungszonen bilden, wobei die Verbindungsmittel derart verteilt angeordnet sind, dass sämtliche umfänglichen Faltenrücken, die dem jeweiligen Stützmantels zugewandt sind, innerhalb zumindest einer Verbindungszone gelegen sind. Dadurch sind für sämtliche Faltenrücken Verankerungsstellen am zugewandten Stützmantel gebildet, durch die eine wirksame Stabilisierung der Faltengeometrie gegen einwirkende Strömungskräfte erfolgt.

Dadurch, dass bei der Erfindung Verbindungsmittel vorgesehen sind, die durch die Zusammenwirkung des Stützmantels mit den zugewandten Faltenrücken des Filtermediums Verbindungszonen bilden, ergibt sich der stabilisierende Verbund, und damit die Faltenstabilisierung, beim Anbringen des Schutzmantels am Filtermedium, wobei Verbindungszonen in der Weise gebildet werden, dass sämtliche umfänglichen Faltenrücken mit dem Stützmantel stabilisierend verbunden sind. Im Gegensatz zum Stand der Technik muss daher nicht für jeden Faltenrücken eine Schweißstelle ausgebildet werden, was in Anbetracht der großen Anzahl von Falten einen erheblichen Aufwand zur Folge hat. Ein weiterer Vorteil gegenüber dem Stand der Technik besteht darin, dass Freiheit bei der Materialauswahl zwischen Filtermedium und Stützmantel besteht, weil nicht auf Kompatibilität für einen Schweißvorgang zu achten ist.

Als Träger für daran befindliche Verbindungsmittel können sowohl der Stützmantel als auch das Filtermedium selbst vorgesehen sein. In beiden Fällen können eine oder mehrere streifenförmige Verbindungszonen gebildet sein, die sich beim Zustand des Aneinanderlegens von Stützmantel und Filtermedium über dessen gesamten Umfang erstreckt bzw. erstrecken. Vorzugsweise sind mehrere im Abstand voneinander verlaufende streifenförmige Verbindungszonen gebildet.

Dabei kann die Anordnung so getroffen sein, dass solche Verbindungszonen in Radialebenen, bezogen auf die Zylinderachse des Filtermediums, verlaufen oder dass zumindest eine streifenförmige, zur Zylinderachse des Filtermediums schräg verlaufende Verbindungszone vorgesehen ist. Alternativ können Cluster von Verbindungszonen vorgesehen sein, die über den Umfang des Filtermediums verteilt sind.

In vorteilhafter Weise können Verbindungsmittel in Form eines Klebstoffauftrages am Stützmantel oder am Filtermedium selbst vorgesehen sein, wobei die Klebstoffaufträge in Form von streifenförmigen Kleberaupen oder Klebstoffclustern vorgesehen sein können.

Wenn ein Klebstoffauftrag am Filtermedium, insbesondere in Form einer oder mehrerer Kleberaupen vorgesehen ist und es sich um einen im Ausgangszustand leicht plastischen Klebstoff handelt, insbesondere einen bei Raumtemperatur aushärtbaren Zweikomponenten-Kleber, bildet der auf die Faltenrücken aufgetragene Klebstoff infolge seiner Plastizität eine geringförmige Einwölbung, die sich in den Faltenzwischenraum zwischen zwei benachbarten Faltenrücken einwölbt. Nach erfolgtem Aushärten bildet diese Einwölbung durch formschlüssigen Eingriff in den Faltenzwischenraum ein besonders wirksames, zusätzliches Stabilisiermittel für die Faltengeometrie.

Andersartige Verbindungsmittel, wie Schweißzusatzstoffe oder Haftmittel für mechanische Haftverbindung zwischen Filtermedium und jeweiligem Stützmantel können ebenfalls vorgesehen sein.

Bei besonders vorteilhaften Ausführungsbeispielen ist die Anordnung so getroffen, dass die Verbindungszonen innerhalb von Bereichen des jeweiligen Stützmantels gelegen sind, die von Fluiddurchlässen frei sind. Bei Klebstoffaufträgen mit im Ausgangszustand plastischen Klebstoffen ist dadurch die Gefahr eines Austretens von Klebstoff durch Fluiddurchlässe vermieden.

Nachstehend ist die Erfindung anhand von in der Zeichnung dargestellten Ausführungsbeispielen im Einzelnen erläutert. Es zeigen:
- Fig.1: in perspektivischer Darstellung das Filtermedium und in Draufsicht den äußeren Stützmantel eines Ausführungsbeispiels des erfindungsgemäßen Filterelements, wobei der Stützmantel in flachem Zustand vor dem Anlegen an das Filtermedium gezeigt ist;
- Fig.2: einen gegenüber Fig.1 vergrößert dargestellten Teilquerschnitt lediglich eines Umfangsabschnittes des Filtermediums des Ausführungsbeispiels von Fig.1;
- Fig.3: eine der Fig.1 entsprechende Darstellung eines weiteren Ausführungsbeispiels der Erfindung und
- Fig.4 und 5: Draufsichten auf den im flachen Zustand befindlichen äußeren Stützmantel für ein drittes bzw. viertes Ausführungsbeispiel der Erfindung.

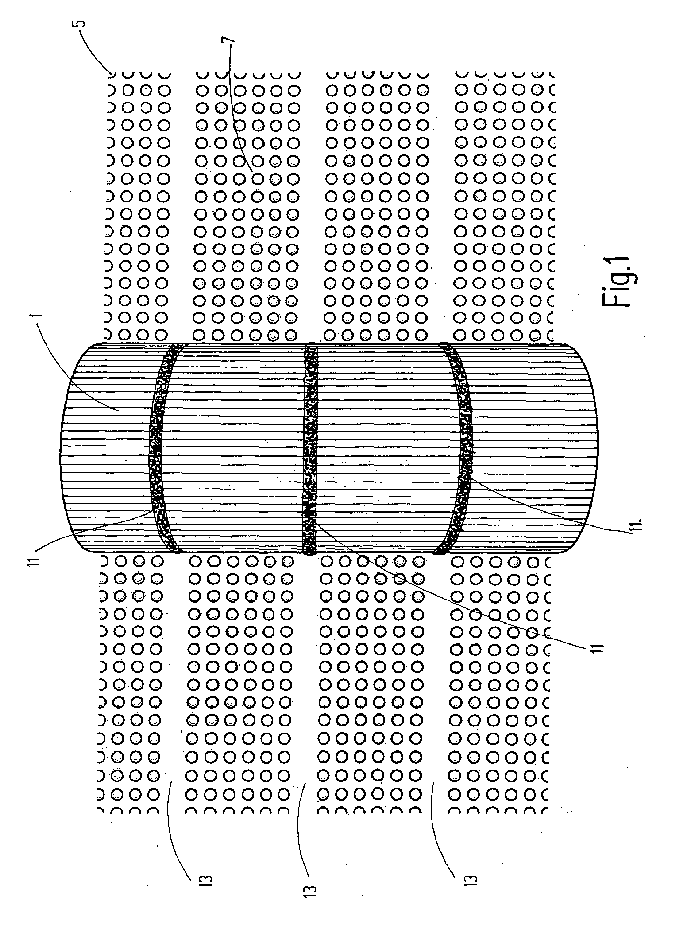

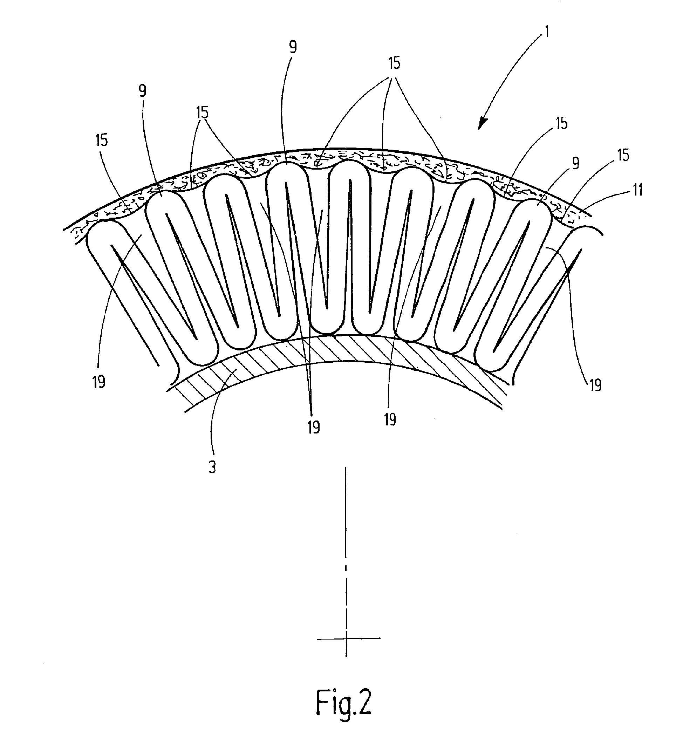

In der Zeichnung ist ein sterngefaltetes oder plisseeartig gefaltetes Filtermedium mit 1 bezeichnet, das für ein im Übrigen nicht dargestelltes Filterelement in der Art einer kreiszylindrischen Filterpatrone vorgesehen ist. Das Filtermedium bildet einen Hohlzylinder, in dem, siehe Fig.2, ein fluiddurchlässiges Stützrohr 3 als innerer Stützmantel angeordnet ist. Ein äußerer Stützmantel 5 in Form einer Kunststoffbahn, die zur Bildung von Fluiddurchlässen mit einem Lochmuster 7 versehen ist, ist in den Fig.1 und 3 bis 5 in flach ausgebreitetem Zustand dargestellt, d.h. vor dem Herumlegen um die Außenseite des Filtermediums 1 und dem Verbinden der Enden der Kunststoffbahn zur Bildung des geschlossenen Stützmantels 5. Das Filtermedium 1 selbst ist aus einer Filtermatte gefaltet, die bei derartigen Filterelementen mehrlagig aufgebaut ist. Dabei kann es sich um ein Stützgewebe als erste Lage, ein Schutzvlies als zweite Lage und um ein Hauptvlies als dritte Lage handeln. Bei dem außenumfänglichen Stützgewebe handelt es sich vorzugsweise um ein Kunststoffgewebe. Als weitere innere Lage können ein weiteres Schutzvlies und gegebenenfalls ein innenumfangsseitig verlaufendes Stützgewebe vorgesehen sein, beispielsweise aus einem Kunststoffgitter oder einem Kunststoffgewebe, wie dies auch bei dem die äußerste Lage bildenden Stützgewebe der Fall sein kann. Die Schutzvlieslage besteht regelmäßig aus einem Kunststoffvlies, und die Hauptvlieslage besteht aus Materialien wie Glasfaserpapier, synthetischem Fasermaterial (Meltblown-Fasern) sowie Zellulosepapier. Die genannten Lagen können auch aus sog. Composit-Materialien gleicher oder verschiedener Art aufgebaut sein.

Für die Stabilisierung der Faltengeometrie sind bei dem Ausführungsbeispiel von Fig.1 und 2 zwischen der Außenseite des Filtermediums 1 und dem äußeren Stützmantel 5 Verbindungsmittel vorgesehen, mittels deren die äußeren Faltenrücken 9 (von denen in Fig.2 lediglich einige beziffert sind) am Stützmantel 5 fixiert sind. Bei dem Beispiel von Fig.1 und 2 ist zu diesem Zweck die Außenseite des Filtermediums 1 mit einem Klebstoffauftrag versehen, und zwar in Form dreier Kleberaupen 11, die, siehe Fig.1, in Form von im Abstand voneinander verlaufenden Streifen das Filtermedium 1 in jeweils einer Radialebene, bezogen auf die Zylinderachse, umringen.

Die Kleberaupen 11 sind axial auf vom Lochmuster 7 freie streifenförmige Bereiche 13 des Stützmantels 5 ausgerichtet, so dass die Kleberaupen 11 in Zusammenwirkung mit den Bereichen 13 des geschlossenen Stützmantels 5 Verbindungszonen bilden, innerhalb deren sich sämtliche Faltenrücken 9 des Filtermediums 1 befinden, so dass eine Fixierung sämtlicher Faltenrücken 9 gebildet ist.

Bei einem Klebstoffauftrag mit einem im Ausgangszustand in gewissem Maße plastischem Klebstoff, insbesondere bei Benutzung eines bei Raumtemperatur aushärtbarem Zweikomponenten-Klebers zur Bildung der Kleberaupen 11, kommt es beim Anlegen des Stützmantels 5 viskositätsbedingt zu einer gewissen Einwölbung 15 (Fig.2) des Klebstoffmaterials in die nach außen offenen Faltenzwischenräume 19, die in Fig.2 nur teilweise beziffert sind. Nach dem Aushärten wirken die Einwölbungen 15 als zusätzliches Stabilisierelement durch formschlüssigen Eingriff in die zwischen Faltenrücken 9 gelegenen Faltenzwischenräume 19.

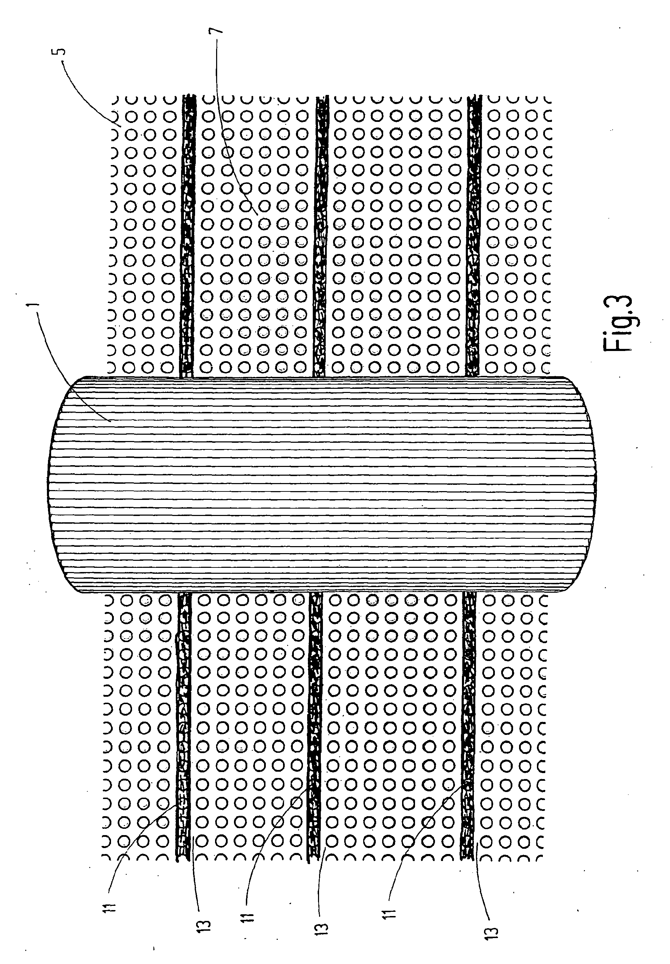

Die Fig.3 verdeutlicht ein zweites Ausführungsbeispiel, das sich vom erstbeschriebenen Beispiel insofern unterscheidet, als die als Verbindungsmittel vorgesehenen Kleberaupen 11 als Klebstoffauftrag auf den äußeren Stützmantel 5 aufgebracht sind, wobei die Kleberaupen 11 wiederum auf vom Lochmuster freie Bereiche 13 des Stützmantels 5 ausgerichtet sind. Wie die Kleberaupen 11 des erstbeschriebenen Beispiels verlaufen die Kleberaupen 11 in Radialebenen in Abständen voneinander, so dass beim Schließen des Stützmantels 5 wiederum entsprechende Verbindungszonen wie beim ersten Ausführungsbeispiel gebildet sind.

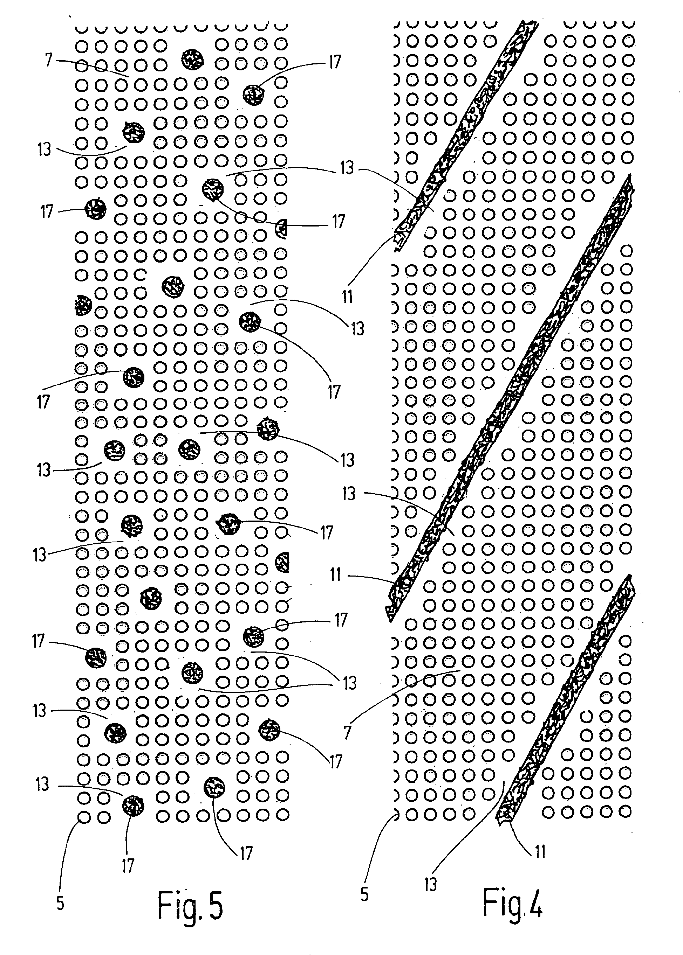

Die Ausführungsbeispiele von Fig.4 und 5 unterscheiden sich vom Beispiel von Fig.3 insofern, als beim Beispiel von Fig.4 die Kleberaupen 11, die auf dem Stützmantel 5 aufgetragen sind, zwar zueinander im Abstand parallel verlaufen, jedoch gegenüber der Zylinderachse im Winkel von etwa 45° geneigt sind. Auch bei diesem Verlauf sind innerhalb der vom Lochmuster 7 freien Bereiche 13 Verbindungszonen gebildet, in denen sämtliche Faltenrücken 9 erfasst sind.

Bei dem Beispiel von Fig.5 sind anstelle von streifenförmigen Kleberaupen 11 als Verbindungsmittel Klebstoffcluster 17 auf die Bahn des Stützmantels 5 aufgetragen, wobei in Fig.5 die Klebstoffcluster 17 lediglich teilweise beziffert sind, ebenso wie die vom Lochmuster 7 freien Bereiche 13 des Stützmantels 5, innerhalb denen die Cluster 17 gelegen sind. Wie Fig.5 zeigt, sind die Cluster 17 derart verteilt angeordnet, dass sich die gebildeten Verbindungszonen wiederum über den gesamten Umfang des Filtermediums erstrecken, d.h. dass alle Faltenrücken 9 von Verbindungszonen erfasst sind.

Anstelle der Benutzung eines Klebstoffauftrages als Verbindungsmittel können thermische Verbindungsverfahren vorgesehen sein, beispielsweise Verfahren, bei denen Schweißzusatzstoffe aufgetragen sind. Auch können mechanische Verbindungen vorgesehen sein, etwa Haftmittel für eine Haftverbindung zwischen Filtermedium und jeweiligem Stützmantel.

## Patentansprüche

1. Filterelement mit einem vorzugsweise mehrlagig ausgebildeten Filtermedium (1), das sternartig gefaltet ist und einen Hohlzylinder bildet, an dessen Außenseite und/oder Innenseite ein an den zugewandten Faltenrücken anliegender, fluiddurchlässiger Stützmantel (3; 5) vorgesehen ist, **dadurch gekennzeichnet, dass** Verbindungsmittel (11; 17) vorgesehen sind, die in Zusammenwirkung mit den dem jeweiligen Stützmantel (5; 3) zugewandten Faltenrücken (9) des Filtermediums Verbindungszonen (13) bilden, und dass die Verbindungsmittel (11; 17) derart verteilt angeordnet sind, dass sämtliche umfänglichen, dem Stützmantel (5; 3) zugewandten Faltenrücken (9) innerhalb zumindest einer Verbindungszone (13) gelegen sind.

2. Filterelement nach Anspruch 1, **dadurch gekennzeichnet, dass** das Filtermedium (1) als Träger für an dessen Faltenrücken (9) befindliche, mit dem jeweiligen Stützmantel (5) in Wirkverbindung bringbare Verbindungsmittel (11) vorgesehen ist.

3. Filterelement nach Anspruch 1, **dadurch gekennzeichnet, dass** der jeweilige Stützmantel (5) als Träger für daran befindliche, mit den betreffenden Faltenrücken (9) des Filtermediums (1) in Wirkverbindung bringbare Verbindungsmittel (11; 17) vorgesehen ist.

4. Filterelement nach einem der vorstehenden Ansprüche, **dadurch gekennzeichnet, dass** die Verbindungsmittel (11) zumindest eine streifenförmige Verbindungszone (13) bilden, die sich beim Zustand des Aneinanderliegens von Stützmantel (5) und Filtermedium (1) über dessen gesamten Umfang erstreckt.

5. Filterelement nach einem der vorstehenden Ansprüche, **dadurch gekennzeichnet, dass** mehrere im Abstand voneinander verlaufende, streifenförmige Verbindungszonen (13) gebildet sind.

6. Filterelement nach einem der vorstehenden Ansprüche, **dadurch gekennzeichnet, dass** in Radialebenen, bezogen auf die Zylinderachse des Filtermediums (1), verlaufende streifenförmige Verbindungszonen (13) gebildet sind.

7. Filterelement nach einem der vorstehenden Ansprüche, **dadurch gekennzeichnet, dass** zumindest eine streifenförmige, zur Zylinderachse des Filtermediums (1) schräg verlaufende Verbindungszone (13) vorgesehen ist.

8. Filterelement nach einem der vorstehenden Ansprüche, **dadurch gekennzeichnet, dass** über den Umfang des Filtermediums (1) verteilte Cluster von Verbindungszonen (13) vorgesehen sind.

9. Filterelement nach einem der vorstehenden Ansprüche, **dadurch gekennzeichnet, dass** Verbindungsmittel in Form eines Klebstoffauftrages (11) am Filtermedium (1) vorgesehen sind.

10. Filterelement nach einem der vorstehenden Ansprüche, **dadurch gekennzeichnet, dass** Verbindungsmittel in Form eines Klebstoffauftrages (11; 17) am jeweiligen Stützmantel (5) vorgesehen sind.

11. Filterelement nach einem der vorstehenden Ansprüche, **dadurch gekennzeichnet, dass** Klebstoffaufträge in Form von streifenförmigen Kleberaupen (11) oder Klebstoffclustern (17) vorgesehen sind.

12. Filterelement nach einem der vorstehenden Ansprüche, **dadurch gekennzeichnet, dass** als Verbindungsmittel Schweißzusatzstoffe oder Haftmittel für mechanische Haftverbindung zwischen Filtermedium (1) und jeweiligem Stützmantel (5) vorgesehen sind.

13. Filterelement nach einem der vorstehenden Ansprüche, **dadurch gekennzeichnet, dass** die Verbindungszonen innerhalb von Bereichen (13) des jeweiligen Stützmantels (5) gelegen sind, die von Fluiddurchlässen (7) frei sind.

14. Filterelement nach einem der vorstehenden Ansprüche, **dadurch gekennzeichnet, dass** die Verbindungsmittel (11, 17) sich zumindest teilweise in Faltenzwischenräume (19) einwölben und Stabilisierungsmittel für die Faltengeometrie durch formschlüssigen Eingriff in die Faltenzwischenräume (19) bilden.
